# EUROPÄISCHE PATENTSCHRIFT

(11) **EP 0 901 875 B1**
(45) Veröffentlichungstag und Bekanntmachung des Hinweises auf die Patenterteilung: **08.08.2001**
(21) Anmeldenummer: 98116526.9
(22) Anmeldetag: 01.09.1998
(51) Int. Cl.: B23K 26/10

(54) **Roboterhand für die Bearbeitung von Werkstücken mit Laserstrahlung**
Robot hand for laser machining of workpieces
Main de robot pour l'usinage laser de pièces

(30) Priorität: 09.09.1997 DE 29716121 U
(43) Veröffentlichungstag der Anmeldung: 17.03.1999
(73) Patentinhaber: Thyssen Laser-Technik GmbH, 52074 Aachen (DE)
(72) Erfinder: Klein, Rolf, Dr.-Ing., 52146 Würselen (DE); Neumann, Günter, 52066 Aachen (DE); Seiler, Stefan, Dipl.-Ing.,, 63785 Obernburg (DE); Fischer, Axel, Dipl.-Ing.,, 63785 Obernburg (DE); Kroth, Eberhard, Dr.-Ing., 63785 Obernburg (DE)
(74) Vertreter: Eichler, Peter, Dipl.-Ing.

(56) Entgegenhaltungen:
- DE-A- 4 335 367
- US-A- 4 855 565

## Beschreibung

Die Erfindung bezieht sich auf eine Roboterhand mit den Merkmalen des Oberbegriffs des Anspruchs 1,

Eine Roboterhand mit den vorgenannten Merkmalen ist aus der US 4,855,565 bekannt. Es erfolgt eine umlenkung der zentral zugeführten Laserstrahlung in einen peripheren Bereich, von dem aus die Laserstrahlung wieder der zentral angeordneten Bearbeitungsoptik zugeführt wird. Die Strahlungsumlenkung erfolgt allein aus konstruktiven Gründen, nämlich wegen der werkstückseitig mit zwei einander parallelen Schwenkachsen versehenen Roboterhand.

Aus der DE 43 35 367 ist es bekannt, Laserstrahlung mittels Lichtleitkabel einem an der Roboterhand vorgesehenen, werkstücknahen Anschluß mit einem Umlenkspiegel zuzuleiten, der die Lasertrahlung koaxial zur Schwenkachse der werkstückseitigen Handachse einkoppelt. Das Lichtleitkabel ist anschlußseitig außenliegend und sein Anschluß bedeutet eine Volumenvergrößerung in relativer Nähe zum Werkstück bei entsprechend baulichem Aufwand.

Der Erfindung liegt daher die Aufgabe zugrunde, eine Roboterhand mit den eingangs genannten Merkmalen so zu verbessern, daß der bauliche Aufwand bzw. das Volumen der Roboterhand im werkstücknahen Bereich verringert wird, ohne auf die geschützte Strahlungszuführung zu verzichten, darüber hinaus aber, die Roboterhand für ihren Einsatz mit einer Vielzahl von Laserquellen auszubilden.

Diese Aufgabe wird durch die Merkmale des Kennzeichenteils des Anspruchs 1 gelöst.

Für die Erfindung ist von Bedeutung, daß der Axialumlenkspiegel als Teil einer Ausbaueinheit ohne weiteres entfernt werden kann. In diesem Fall kann die Roboterhand nach dem Ausbau des Axialumlenkspiegels zwar nicht mehr in Verbindung mit einer zentralen Strahlzuführung für die Laserstrahlung benutzt werden, jedoch wird die Möglichkeit für eine konstruktiv abweichende Strahlzuführung eröffnet, indem an der Stelle des ausgebauten Axialumlenkspiegel ein achsparalleler Strahlungsdurchtritt zum Schwenkachsenspiegel vorhanden ist. Da sich der Axialumlenkspiegel geschützt im Inneren der roboterseitigen Handachse befindet, ist auch der achsparallele Strahlungsdurchtritt zum Schwenkachsenspiegel durch die Roboterhand entsprechend geschützt. Damit eröffnet die Roboterhand die Möglichkeit, unterschiedliche Laserquellen einzusetzen, ohne daß sie im vielfach kritischen werkstücknahen Bereich konstruktiv erheblich umgestaltet werden müßte. Insbesondere ist der Außenumfang stets derselbe. Einmal festgelegte dynamische Qualitäten und Bemessungen, z.B. im Hinblick auf kompliziert gestaltete Werkstückgeometrien, sind infolgedessen weitgehend unabhängig davon, welche Laserquelle zum Einsatz kommt. In allen Fällen erfolgt die Strahlzuführung durch das geschützte Innere der roboterseitigen Handachse.

An der werkstückseitigen Handachse können bedarfsweise Arbeiten ausgeführt werden, ohne daß dabei auf etwaige unterschiedliche Zuführung der Laserstrahlung oder auf unterschiedliche Laser Rücksicht genommen werden müßte. Beispielsweise ist es problemlos, am Austritt der werkstückseitigen Handachse unterschiedliche Bearbeitungsoptiken für das Löten, für das Schweißen von Metallen und Kunststoffen, für das Schneiden oder für die Oberflächenbearbeitung anzubauen bzw. auszuwechseln. Auch das Einbauen oder das Austauschen des Schwenkachsenspiegels und/oder des Achsenkörperspiegels im Hinblick auf Laserstrahlung unterschiedlicher Laser ist unproblematisch und kann mit dem Einbau von Sensoren für eine Prozeßüberwachung verknüpft werden, wobei die Sensoren hinter den Spiegeln angeordnet werden.

Der achsparallele Strahlungsdurchtritt zum Schwenkachsenspiegel kann in seiner Struktur an alle Strahlquerschnitte angepaßt werden, die von beliebigen Lasern erzeugt werden. Die mit der roboterseitigen Handachse zusammenzubauende Ausbaueinheit kann in jedem Fall auf solche strahlungsdurchtritte zum Schwenkachsenspiegel abgestimmt werden.

Die Roboterhand kann dahingehend ausgestaltet werden, daß an der Stelle des ausgebauten Axialumlenkspiegels eine Anschlußeinheit eines Lichtleitkabel der roboterseitigen Handachse einbaubar ist, Eine solche Anschlußeinheit ersetzt die Ausbaueinheit völlig oder teilweise und läßt sich an die Notwendigkeiten zum Anschluß des Lichtleitkabels oder unterschiedlicher Lichtleitkabel anpassen. Die Anschlußheit kann also eine Adapterfunktion erfüllen, so daß die roboterseitige Handachse im übrigen nicht speziell zum Anschließen des Lichtleitkabel angepaßt werden muß.

Die Roboterhand kann dahingehend ausgestaltet werden, daß die Ausbaueinheit ein prismatischer Körper mit einander parallelen Strahldurchtrittskanälen ist, die durch einen zu diesen vertikalen Verbindungskanal miteinander verbunden sind, und daß der prismatische Körper den Radial- und den Axialumlenkspiegel mit durch die Schnittstellen der Kanalachsen gelegten Reflexionsflächen trägt. Ein prismatischer Körper als Grundstruktur der Ausbaueinheit ist fertigungstechnisch leicht herzustellen und besitzt die erforderliche Präzision. Der Radial- und der Umlenkspiegel können mit ihren Reflexionsflächen exakt parallel angeordnet werden und die Parallelität bzw. Rechtwinkeligkeit der Kanäle, auch in Bezug auf die Anbaufläche des prismatischen Körpers an die roboterseitige Handachse, bewirkt höchste optische Präzision.

Vorteilhaft ist es des weiteren, die Roboterhand so auszubilden, daß eine rohrförmige roboterseitige Handachse werkstückseitig mit einer Abschlußwand versehen ist, an der die Ausbaueinheit oder die Anschlußeinheit befestigt ist. Die Abschlußwand der roboterseitigen Handachse bildet nicht nur eine erwünschte Stabilisierung im Bereich nahe der werkstückseitigen Handachse, sondern sie ermöglicht es auch, die Ausbaueinheit und/oder die Anschlußeinheit einfach auszugestalten, positionsgerecht anzubauen und sicher zu befestigen, ohne daß der konstruktive Aufwand für die genannten Einheiten besonders groß wäre.

Die Roboterhand kann so ausgebildet werden, daß die rohrförmige roboterseitige Handachse an einem roboterseitigen Endflansch um ihre Längsachse drehbar gelagert ist und im Bereich des Endflansches eine mit der Anschlußeinheit des Lichtleitkabels fluchtende Kabeldurchführung aufweist. Es ist infolgedessen möglich, ein Lichtleitkabel zur Zuführung von Laserstrahlung einzusetzen, welches innerhalb der roboterseitigen Handachse vom Endflansch bis zur Anschlußeinheit geschützt ist. Sämtliche dynamischen Vorgänge spielen sich außerhalb der roboterseitigen Handachse in einem Bereich ab, der vom Werkstück weit entfernt ist und somit werkstückungestörten Freiraum für eine optimale, nämlich beansprungsminimalisierte Zuführung des Lichtleitkabels darstellt.

Es ist möglich, die Roboterhand so auszubilden, daß die roboterseitige Handachse im Bereich des Endflansches eine zentrale Durchtrittsöffnung der zentralen Strahlzuführung aufweist. Infolgedessen kann Laserstrahlung zentral in die roboterseitige Handachse eingestrahlt und umlenkungsfrei bis zum Radialumlenkspiegel gelangen. Weitere Anpassungen der roboterseitigen Handachse zum Zwecke der zentralen Strahlzuführung sind nicht erforderlich.

Ein besonders kompaktes Werkzeug ergibt sich, wenn die Roboterhand so ausgebildet wird, daß an dem Endflansch eine Halteeinrichtung eines Lasers befestigt ist, dessen Laserstrahlung der zentralen Durchtrittsöffnung der roboterseitigen Handachse im Bereich des Endflansches über Umlenkspiegel der Halteeinrichtung fluchtend zugeführt ist. In diesem Fall sind der Laser und der Roboter mittels der Halteeinrichtung zusammengebaut. Es ergibt sich eine Handhabungseinheit, bei der der Laser vom Roboter zur Bearbeitung mitbewegt wird, was den insgesamt für die Bearbeitungseinheit benötigten Raumbedarf sehr verringert. Die zentrale Durchtrittsöffnung der roboterseitigen Handachse, deren Lage sich bei der Drehung der Handachse nicht verändert, ermöglicht eine problemlose Einkopplung der Laserstrahlung in die Handachse. Dabei ist die Zuleitung der Laserstrahlung vom Laser zur Handachse über Umlenkspiegel der Halteeinrichtung problemlos möglich.

Eine weitere vorteilhafte Bearbeitungsmaschine ergibt sich, wenn die Roboterhand so ausgebildet wird, daß in die roboterseitige Handachse ein Diodenlaser eingebaut ist, dessen Laserstrahl innerhalb der Handachse zentral dem Radialumlenkspiegel der Ausbaueinheit oder ohne Strahlumlenkung direkt dem Schwenkachsenspiegel zugeleitet ist. In diesem Fall erweist sich die roboterseitige Handachse als besonders vielseitig, weil sowohl die Ausbaueinheit in Verbindung mit zentraler Strahlzuführung benutzt werden kann, als auch ihre Ausbildung, bei der die Strahlung ohne Strahlumlenkung direkt dem Schwenkachsenspiegel zugeleitet werden kann, nämlich nach Ausbau der Ausbaueinheit. Im letzteren Fall könnte der Diodenlaser auch in Verbindung mit einem Lichtleitkabel verwendet werden, das eine etwa zwischen dem Laser und dem achsparallelen Strahlungsdurchtritt vorhandene Distanz überbrückt und an eine Anschlußeinheit eines Lichtkabels angeschlossen ist. Der Einsatz eines solchen Lichtleitkabels ist insbesondere dann vorteilhaft, wenn der Austritt der Laserstrahlung aus dem Diodenlaser weder mit der Zentralachse der roboterseitigen Handachse fluchtet, noch mit deren achsparallelen Strahlungsdurchtritt.

Um die Roboterhand mit eingebautem Diodenlaser problemlos betreiben zu können, ist sie so ausgebildet, daß im Bereich des Endflansches der roboterseitigen Handachse eine Durchführung für eine Elektroleitung und/oder eine Kühlmittelleitung des Diodenlasers vorhanden ist. Die für den Diodenlaser erforderlichen Zuleitungen finden sich also nicht im radialen Bereich der roboterseitigen Handachse und stören demgemäß dort auch nicht.

Die Erfindung wird anhand in der Zeichnung dargestellter Ausführungsbeispiele näher erläutert. Es zeigt:
- Fig. 1: einen Längsschnitt durch eine Roboterhand,
- Fig.2: einen vergrößerten Längsschnitt des in Fig.1 dargestellten Kopfes der Roboterhand

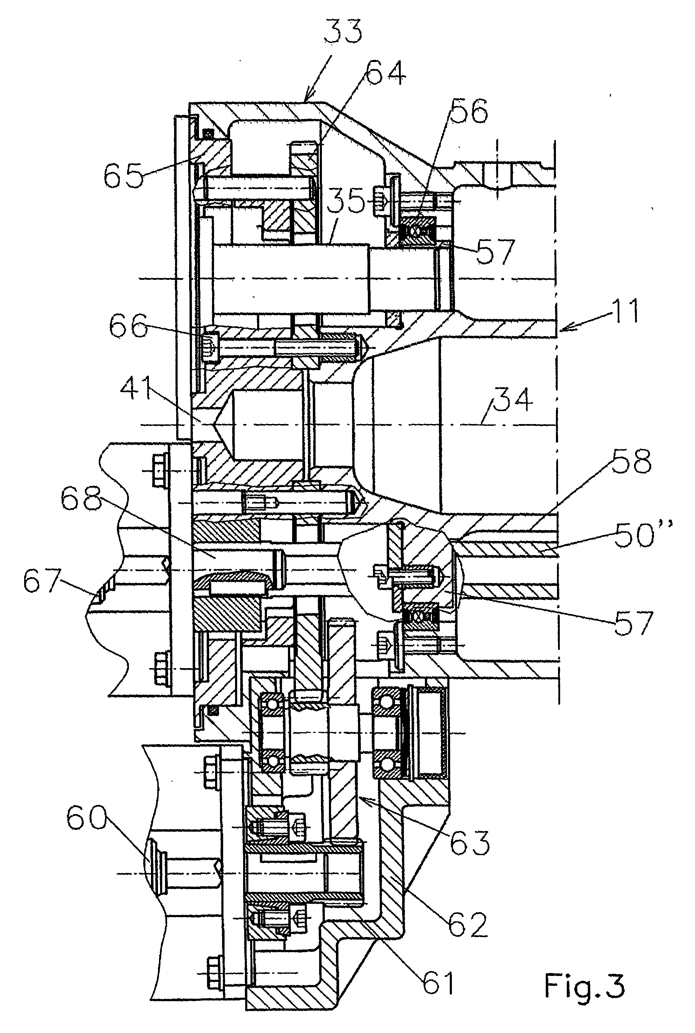

- Fig.3: eine vergrößerte Darstellung des in Fig.1 links dargestellten Endflanschbereichs der Roboterhand
- Fig.4: eine der Fig.1 ähnliche Darstellung mit einem einen Laser tragenden Haltewinkel, der an dem Endflansch der Roboterhand befestigt ist,
- Fig.5: eine Aufsicht auf die Anordnung der Fig.4, ohne Laser und ohne Strahlumlenkung,
- Fig.6: eine vergrößerte Darstellung des in Fig.4 rechts dargestellten Kopfs der Roboterhand,
- Fig.7: eine der Fig.1 ähnliche Darstellung einer Roboterhand mit einem eingebauten Diodenlaser.

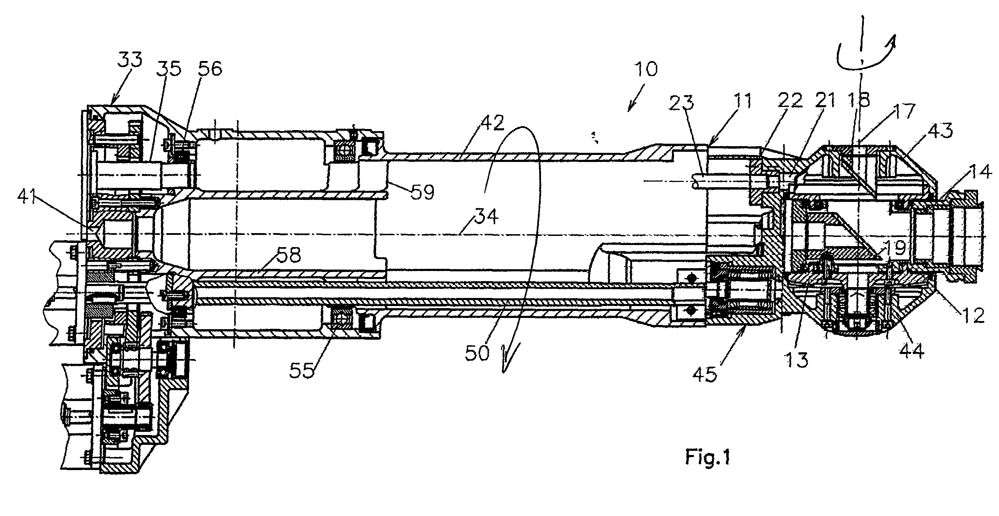

Die in Fig.1 dargestellte Roboterhand 10 ist Bestandteil einer Werkzeugmaschine zur Bearbeitung von Werkstücken mit Laserstrahlung. Die Roboterhand ist beispielsweise Bestandteil eines Knickarmroboters, wie er prinzipiell in der DE 43 35 367 beschrieben wurde. Ein solcher Roboter ist so ausgestaltet, daß seine Roboterhand in allen Richtungen der karthesischen Koordinaten x,y und z die erforderlichen Bewegungen im Rahmen der Reichweiten seiner Achsen durchführen kann. Der Roboter ist üblicherweise mit fünf Achsen für die 3-D-Bearbeitung von Werkstücken ausgebildet. Jede der Achsen besitzt einen Stellmotor für den Drehantrieb. Alle Stellmotoren werden von einer Bahnsteuerung so beaufschlagt, daß sie die gewünschten Achsenbewegungen veranlassen.

Von den Achsen des Knickarmroboters sind in den Zeichnungen zwei Achsen jeweils ganz oder teilweise dargestellt. Es sind dies eine werkstückseitige Handachse 12 und roboterseitige Handachse 11. Die werkstückseitige Handachse 12 ist mittels eines Achsenkörpers 13 um eine in der Fig. 1 vertikale Schwenkachse 17 schwenkbeweglich und die roboterseitige Handachse 11 ist um eine in der Fig.1 horizontale Längsachse 34 drehbar. Eine Verdrehung der Handachse 11 bewirkt also eine entsprechende Verdrehung der Handachse 12.

Die roboterseitige Handachse 11 der Roboterhand 10 besteht im wesentlichen aus einem Gehäuserohr 42, das werkstückseitig mit einer Abschlußwand 32 versehen ist. Die Abschlußwand 32 ist Bestandteil eines Achsenkopfes 42, der mit dem rohrartigen Gehäuse 42 fest zusammengebaut ist. Der Achsenkopf 42 ist gabelförmig ausgebildet und hat infolgedessen zwei der Längsachse 34 parallel vorspringende Gabelarme 43,44. In den Raum zwischen den beiden Gabelarmen 43,44 ist der Achsenkörper 13 eingebaut, der sich mit den Wälzlagern 46 am Gabelarm 44 und mit dem Wälzlager 47 am Gabelarm 43 schwenkbar abstützt. Der schwenkbare Achsenkörper 13 ist ge-genüber den Gabelarmen 43,44 mit Dichtungen 48 abgedichtet.

Der Schwenkantrieb der werkstückseitigen Handachse 12 erfolgt über eine Verzahnung 49, in die ein nicht dargestelltes Ritzel oder Schneckenrad eingreift, das seinerseits drehangetrieben wird. Der Drehantrieb erfolgt über ein Drehrohr 50, das mit seinem achsenkörperseitigen Ende 50' an ein Lagerstück 51 angeschlossen ist, das in einem Drehlager 52 lagert. Das Lagerstück 51 leitet die aus dem Drehrohr 50 herrührenden Drehmomente an die Lagerwelle 53 des in den Achsenkörper 13 eingreifenden Ritzels oder Schneckenrads weiter.

Mit dem schwenkbaren Achsenkörper 13 kann die Handachse 12 um über 180° zwischen den Gabelarmen 43,44 geschwenkt werden. Dementsprechend wird eine Bearbeitungsoptik 14 geschwenkt, die in den Figuren lediglich schematisch durch entsprechende Aufnahme- und Befestigungsflansche dargestellt wurde. An dem schwalbenschwanzförmigen Befestigungsflansch 14' wird beispielsweise ein Modul justierbar angebaut, der eine Optikkomponente enthält, also beispielsweise eine Fokussierlinse. Die Bearbeitungsoptik 14 bzw. ein eine solche Bearbeitungsoptik aufweisender Bearbeitungskopf, beispielsweise ein Schneidkopf, wird dann genau entsprechend der Verschwenkung des Achsenkörpers 13 um die Schwenkachse 17 verschwenkt.

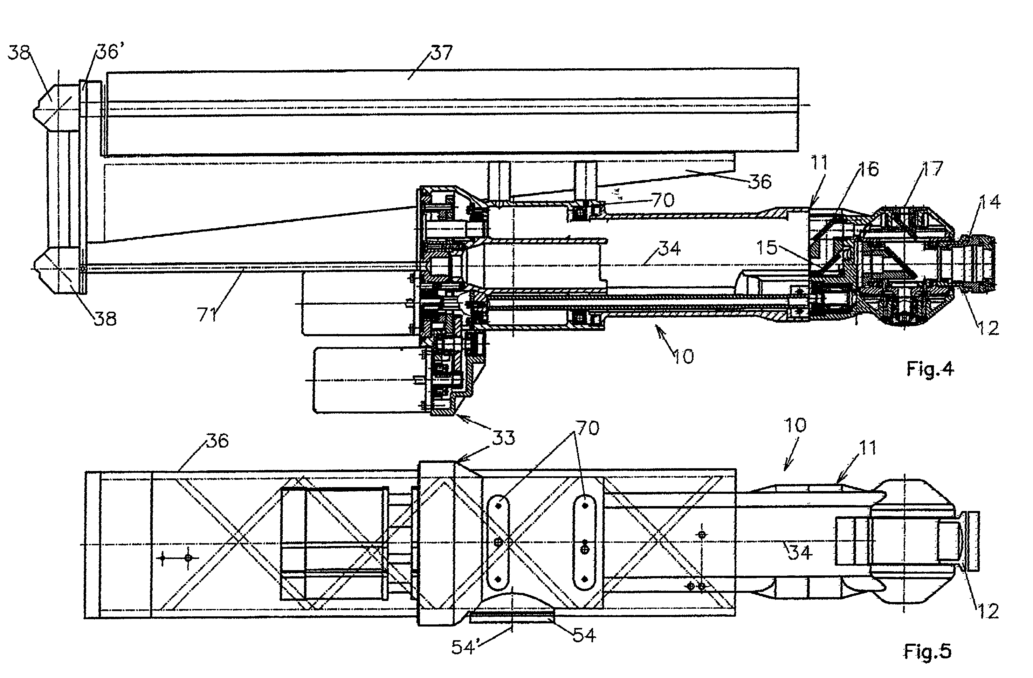

Um die roboterseitige Handachse 11 am Roboter befestigen zu können, besitzt sie einen Endflansch 33. Der Endflansch 33 hat einen in Fig.5 dargestellten Befestigungsflansch 54 zur Befestigung an einem Arm des Knickarmroboters. Der Befestigungsflansch 54 ist den Gabelarmen 43,44 parallel. Es ist möglich, die roboterseitige Handachse 11 mit einem nicht dargestellten Schwenkantrieb um die in Fig. 5 dargestellte Schwenkachse 54' zu schwenken.

An dem Endflansch 33 ist das rohrförmige Gehäuse 42 mit einem Wälzlager 55 drehbar gelagert. Eine weitere Drehlagerung erfolgt mit einem Wälzlager 56, das innen einen Lagerflansch 57 aufnimmt, der an einem Innenrohr 58 befestigt ist, welches seinerseits einstückig mit dem Gehäuse 42 verbunden ist, beispielsweise über die Befestigungsrippen 59. Der Drehantrieb der Handachse 11 bzw. ihres Gehäuses 42 erfolgt über einen nicht näher dargestellten Antriebsmotor 60, dessen Drehmoment auf ein Antriebritzel 61 weitergeleitet wird, welches im Getriebegehäuse 62 untergebracht ist. Das Antriebsritzel 61 treibt über eine Untersetzungsstufe 63 ein Handachsenrad 64 an, dessen Drehachse mit der Längsachse 34 zusammenfällt. Das Handachsenrad 64 ist mit dem Innenrohr 58 drehfest verbunden, z.B. über Befestigungsschrauben 66, mit denen zugleich auch eine Flanschverschlußplatte 65 befestigt wird. Die Flanschverschlußplatte 65 dreht sich also mit dem Handachsenrad 64, wenn dieses vom Antriebsmotor 60 drehangetrieben wird. Dementsprechend drehen sich auch alle mit der Flanschverschlußplatte 65 verbundenen Bauteile, insbesondere ein Antriebsmotor 67 für den Drehantrieb des Drehrohrs 50, dessen endkappenseitiges Ende 50'' mit einem Kupplungsstück 68 antriebsmäßig verbunden ist, welches vom Motor 67 drehangetrieben wird. Dementsprechend kann der Schwenkantrieb der werkstückseitigen Handachse 12 mittels des Antriebsmotors 67 in jeder Dreheinstellstellung der Handachse 11 durchgeführt werden, auch während der Verstellung dieser roboterseitigen Handachse 11.

Die Flanschverschlußplatte 65 des roboterseitigen Endflansches 33 ist mit einer Durchtrittsöffnung 41 versehen. Diese ist zentral ausgebildet, umschließt also die Längsachse 34. Die Durchtrittsöffnung 41 ist eine Bohrung in der Flanschverschlußplatte 65. Außerdem ist in die Flanschverschlußplatte 65 eine Durchführung 35 eingebaut, die sich durch das Handachsenrad 64 hindurch erstreckt bis in den freien Raum zwischen dem Endflansch 33 und dem Innenrohr 58. Je nach Konfiguration des Knickarmroboters wird die Durchtrittsöffnung 41 und/oder die Durchführung 35 unterschiedlich benutzt, um Laserstrahlung und/oder sonstige im Inneren der Handachse 11 benötigte Funktionselemente in das Innere dieser Handachse 11 einzubringen.

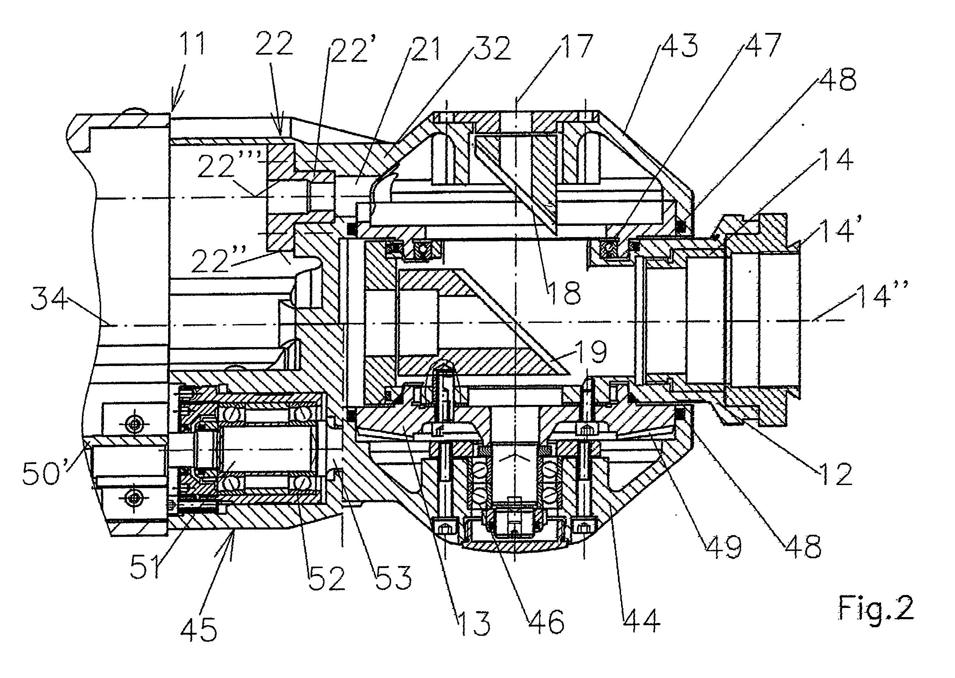

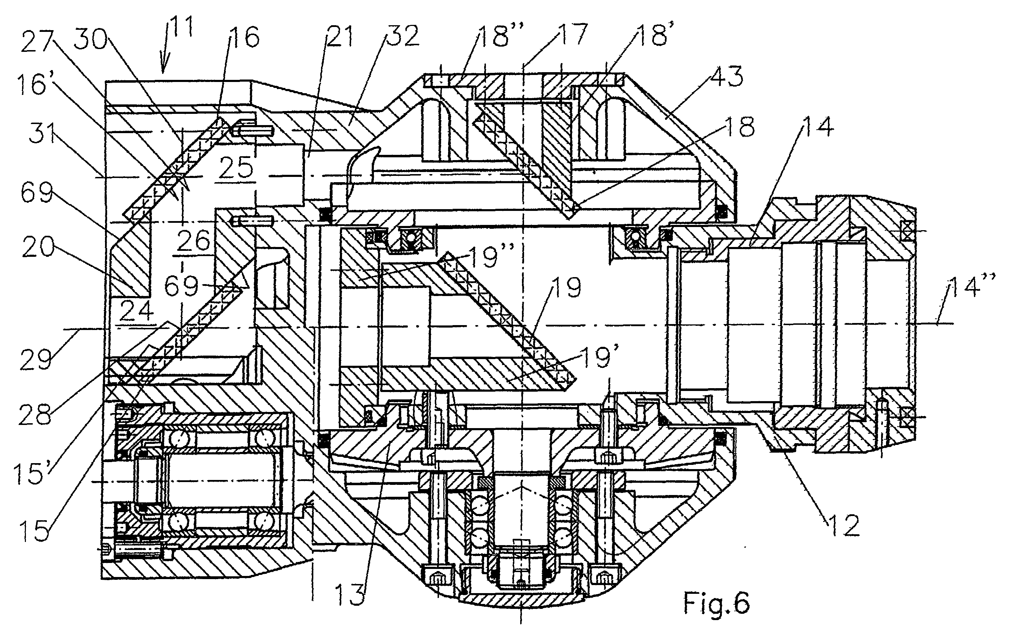

Von Bedeutung für die Ausbildung der Roboterhand in Bezug auf die Anwendung unterschiedlicher Laser ist die Zuleitung der Laserstrahlung in das Innere der Handachsen 11, 12 und die darin vorgesehene Weiterleitung bis zum Strahlungsaustritt durch die Bearbeitungsoptik 14. Die Handachse 11 bietet zwei Möglichkeiten der Strahlungszuführung, nämlich die Zuführung durch die zentrale Durchtrittsöffnung 41 und die Zuführung durch die dazu radial versetzte Durchführung 35. Von diesen Zuführungen aus muß die Laserstrahlung zu einem Schwenkachsenspiegel 18 gelangen, der sich im Gabelarm 43 der Handachse 11 befindet, Da der Bereich des Schwenkachsenspiegels 18 mit einer Abschlußwand 32 vom Inneren des Gehäuses 42 getrennt ist, wurde in der Abschlußwand 32 ein achsparalleler Strahlungsdurchtritt 21 zum Schwenkachsenspiegel 18 vorgesehen. Es ist dies im wesentlichen die aus der Fig.2 bzw. auch aus der Fig.6 entnehmbare Bohrung. Der Schwenkachsenspiegel 18 leitet die auf ihn treffende Laserstrahlung schwenkachsenparallel auf einen Achsenkörperspiegel 19, der die auf ihn treffende Laserstrahlung in der Richtung der Achse 14'' der Bearbeitungsoptik 14 abstrahlt. Der Spiegel 18 ist mit einem Justierstück 18' über einen Anbauflansch 18'' justierbar am Gabelarm 43 befestigt. Der Spiegel 19 ist mit einem Justierstück 19' justierbar an einem Anbauflansch 19'' des Achsenkörpers 13 befestigt. Über die Justierbarkeit der beiden Spiegel 18,19 in der Handachse 12 wird eine genaue Einstellung der Strahlenachse relativ zur Längsachse 34 und zur Schwenkachse 17 erreicht. Diese Einstellung ist notwendig, um eine lagerichtige Positionierung des Laserstrahls auf der Bearbeitungsoptik bei realen Bewegungen des Roboters zu gewährleisten.

Fig.6 zeigt detailliert die Ausgestaltung der roboterseitigen Handachse 11 nahe der Abschlußwand 32, wenn die Laserstrahlung zentral zugeführt wird. In diesem Fall muß eine Strahlumlenkung aus der Längsachse 34 in den Strahlungsdurchtritt 21 erfolgen. Hierzu ist eine Ausbaueinheit 20 vorhanden, die im wesentlichen aus einem prismatischen Körper besteht, nämlich einem passend bearbeiteten Metallstück. Die Ausbaueinheit besitzt zwei einander parallele Strahldurchtrittskanäle 24,25, die innerhalb der Einheit 20 einen vertikalen Verbindungskanal 26 aufweisen, wobei alle Kanäle denselben, auf die Laserstrahlung abgestimmten Durchtrittsquerschnitt haben. Die Achsen 29 bis 31 der Kanäle schneiden sich in Schnittstellen 27,28, die in der Ebene von Außenflächen 69 der Einheit 20 liegen. Diese Außenflächen 69 sind unter 45° zu den Kanalachsen 29 bis 31 angestellt und tragen jeweils einen Radialumlenkspiegel 15 und einen Axialumlenkspiegel 16, Dementsprechend liegen die Spiegelflächen der Spiegel 15,16 mit den Außenflächen 69 der Einheit 20 gleich und reflektieren die Laserstrahlung durch deren Kanäle 24 bis 26. Die auf den Radialumlenkspiegel 15 treffende Laserstrahlung gelangt zum Axialumlenkspiegel 16 und von diesem durch den Strahlungsdurchtritt 21 zum Schwenkachsenspiegel 18. Der Einbau der Ausbaueinheit 20 erfolgt durch Anlage an der Abschlußwand 32 mit entsprechend dargestellter Verstiftung, jedoch ohne Justierung. Für die Justierung ist die Justierbarkeit der Spiegel 18,19 ausreichend.

Fig.4 zeigt den Einsatz der Roboterhand 10 mit einem CO₂-Laser 37 bei Anwendung einer Ausbaueinheit 20 innerhalb der roboterseitigen Handachse 11. Der Laser 37 wird von einer Halteeinrichtung 36 getragen, die an Anbauflanschen 70 des Endflansches 33 der Handachse 11 befestigt ist. Demgemäß wird der Laser 37 bei Verdrehung der Handachse 11 bzw. bei Verdrehung des Gehäuses 42 nicht mit verdreht. Der Laser 37 wird vielmehr nur im Umfang der Bewegung des Endflansches 33 bewegt, dessen Bewegungen über den Flansch 54 eingeleitet werden. Die Halteeinrichtung 36 ist gemeinsam mit dem Laser 37 parallel zur Handachse 11 ausgerichtet und überlappt diese bis in die Nähe der Abschlußwand 32, so daß sich eine kompakte Ausbildung von Laser und Knickarmroboter im werkstücknahen Bereich ergibt. Die Roboterhand 10 und die Halteeinrichtung 36 mit dem Laser 37 liegen in einer vorzugsweisen vertikalen Ebene. Die Aufsicht der Fig.5 zeigt, daß die Einheit schmal baut, wenn ein schlanker Laser zum Einsatz kommt. In die kompakte Ausbildung sind sämtliche Elemente einbezogen, die dazu dienen, die vom Laser 37 erzeugte Laserstrahlung in das Innere der Handachse 11 einzukoppeln. Hierzu dienen Umlenkspiegel 38, welche die zur Längsachse 34 achsparallel erzeugte Laserstrahlung in die Achse 34 umlenken, wozu sie an einer dem Werkstück abgewendet an der Halteeinrichcung 36 angebrachten Platte 36' befestigt sind und zwar einmal auf Höhe der Längsachse des Lasers 37 und zum anderen auf Höhe der Längsachse 34. Von dem auf Höhe der Längsachse 34 angeordneten Umlenkspiegel 38 gelangt die Laserstrahlung durch ein Rohr 71 und die zentrale Durchtrittsöffnung 41 der Flanschverschlußplatte 65 bis auf den Radialumlenkspiegel 15. Von diesem aus erfolgt die zu Fig.6 vorbeschriebene Umlenkung der Laserstrahlung in die Achse 14'' der Bearbeitungsoptik 14, nämlich unabhängig von allen möglichen Dreh- und Schwenkstellungen der Handachsen 11,12.

Die Roboterhand 10 kann auch in Verbindung mit einem Nd:YAG-Laser eingesetzt werden. Nd:YAG-Laser können in Verbindung mit Lichtleitkabeln eingesetzt werden, da diese eine weitgehend verlustfreie Weiterleitung dieses Laserlichts gestatten. Ein solches Lichtleitkabel wird durch eine als Kabeldurchführung ausgebildete Durchführung 35 in das Innere des Gehäuses 42 eingeführt. Das Ende des Lichtleitkabels 23 wird mit der in den Fig.1,2 dargestellten Anschlußheit 22 an der Abschlußwand 32 befestigt. Die Anschlußeinheit 22 hat ein in den Strahlungsdurchtritt 21 passendes Einsteckende 22' und wird an der Abschlußwand 32 mit ihrem Flansch 22' beispielsweise durch Verschraubung befestigt. Die Bohrung 22''' dient dem Einbau des Endes des Lichtleitkabels 23. Die Anschlußeinheit 22 tritt an die Stelle des Axialumlenkspiegels 16, der vor dem Einbau der Anschlußeinheit 22 durch Entfernen der Ausbaueinheit 20 entfernt wurde, so daß der Einbau der Anschlußheit 22 möglich wurde. Der von der Ausbaueinheit 20 benötigte Raum innerhalb der Handachse 11 bleibt im übrigen frei. Das Lichtleitkabel 23 ist innerhalb des Gehäuses 42 geschützt und alle infolge der Bewegungen der Roboterhand 10 notwendigen Bewegungen des Lichtleitkabels finden außerhalb der Roboterhand 10 statt. Sofern der Nd:YAG-Laser mit der Halteeinrichtung 36 zusammengebaut werden kann, wie in Fig. 4 für den CO₂-Laser dargestellt wurde, entfallen die dort erforderlichen Umlenkspiegel 38 und Schutzrohre und können durch das Lichtleitkabel 23 ersetzt werden.

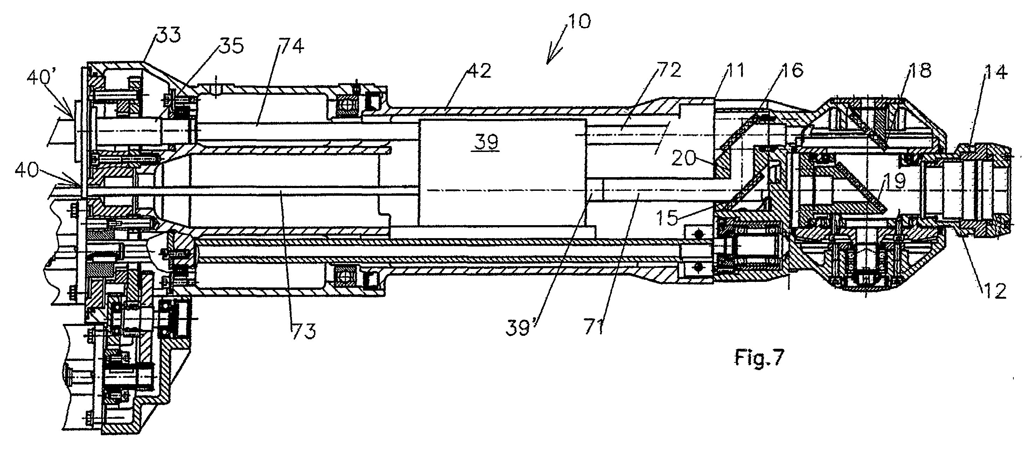

Fig.7 zeigt eine weitere Variante des Einsatzes der Roboterhand 10 in Verbindung mit einem anderen Laser, nämlich einem Diodenlaser 39. Der Diodenlaser 39 ist in das Gehäuse 42 eingebaut und hier starr befestigt, also auch unbeweglich bezüglich der Abschlußwand 32. Die von diesem Laser 39 erzeugte Laserstrahlung tritt zentral aus, verläuft also in der Längsachse 34 und trifft auf den Radialumlenkspiegel 15 der Ausbaueinheit 20. Diese ist wie in Fig.6 beschrieben ausgebildet und leitet die Laserstrahlung dementsprechend zur Bearbeitungsoptik 14. Der Laser 39 kann aber auch so ausgebildet werden, daß die von ihm erzeugte Laserstrahlung ohne Einsatz der Ausbaueinheit 20 zur Anwendung kommt. In diesem Fall wird die Ausbaueinheit 20 entfernt und die Laserstrahlung wird durch den an der Stelle des Axialumlenkspiegel 16 vorhandenen achsparallelen Strahlungsdurchtritt 21 auf den Schwenkachsenspiegel 18 gelenkt. Der Laserstrahl 72 dieser Laserstrahlung ist dem. Laserstrahl 71 der zentral zugeführten Laserstrahlung achsparallel. Von einer solchen Achsparallelität kann aber auch abgewichen werden, indem ein Ausgang 39' eines Diodenlasers 39 in nicht dargestellter Weise mit einem Lichtleitkabel dem Strahlungsdurchtritt 21 zugeführt ist, wozu es beispielsweise mit einer Anschlußeinheit 22 an die Abschlußwand 32 angeschlossen ist.

Zur Versorgung des Diodenlasers 39 ist elektrische Energie notwendig, wie auch Kühlmittel. Es ist daher eine Elektroleitung 73 und eine Kühlmittelleitung 74 vorgesehen, die von außen in das Innere des Gehäuses 42 geführt sind. Hierzu dienen Durchführungen 40,40', auf die in Fig.7 schematisch hingewiesen wird. Die Kühlmittelleitung kann beispielsweise mit einer entsprechend angepaßten Durchführung 35 erfolgen. Für die Durchführung der Elektroleitung 73 ist eine zentrale Durchtrittsöffnung 41 geeignet. Beide Leitungen 73,74 können flexibel ausgebildet werden, so daß es auf fluchtende Anschlüsse am Laser 39 nicht ankommt. Insgesamt ergibt sich eine kompakte Roboterhand, die den Diodenlaser umschließt und entsprechend schützt. Lichtleitungsverluste sind minimal,

Die Ausgestaltung der optischen Komponenten der Roboterhandachse 10 kann an die jeweils erforderlichen Gegebenheiten angepaßt werden. Beispielsweise sind an die Wellenlänge der Laserstrahlung angepaßte Spiegelwerkstoffe einsetzbar. Werden für die Spiegel oberflächenbeschichtete Glassubstrate mit selektiven Reflektionsschichten eingesetzt, so können hinter den Spiegeln geeignete Sensoren für die Prozeßüberwachung geschützt eingebaut werden,

## Patentansprüche

1. Roboterhand (10) für die Bearbeitung von Werkstücken mit Laserstrahlung, insbesondere für einen Knickarmroboter, mit einer roboterseitigen Handachse (11), an der eine werkstückseitige Handachse (12) schwenkbeweglich mittels eines Achsenkörpers (13) angebracht ist, an dem eine die Laserstrahlung auf das Werkstück richtende Bearbeitungsoptik (14) vorhanden ist, mit einer zentralen Strahlzuführung in der roboterseitigen Handachse (11), die die Laserstrahlung zu einem Radialumlenkspiegel (15) und zu einem nachgeordneten Axialumlenkspiegel (16) führt, von dem aus die Laserstrahlung auf einen sie in die Schwenkachse (17) des Achsenkörpers (13) umlenkenden Schwenkachsenspiegel (18) trifft, und mit einem die vom Schwenkachsenspiegel (18) kommende Laserstrahlung der Bearbeitungsoptik (14) zuleitenden Achsenkörperspiegel (19), **dadurch gekennzeichnet**, daß zumindest der Axialumlenkspiegel (16) Teil einer sich innerhalb der roboterseitigen Handachse (11) befindlichen Ausbaueinheit (20) ist, und daß an der Stelle des ausgebauten Axialumlenkspiegels (16) ein achsparalleler, Strahlungsdurchtritt (21) zum Schwenkachsenspiegel (18) vorhanden ist.

2. Roboterhand nach Anspruch 1, **dadurch gekennzeichnet,** daß an der Stelle des ausgebauten Axialumlenkspiegels (16) eine Anschlußeinheit (22) eines Lichtleitkabels (23) der roboterseitigen Handachse (11) eingebaut ist.

3. Roboterhand nach einem der Ansprüche 1 oder 2, **dadurch gekennzeichnet,** daß die Ausbaueinheit (20) ein prismatischer Körper mit einander parallelen Strahldurchtrittskanälen (24,25) ist, die durch einen zu diesen vertikalen Verbindungskanal (26) miteinander verbunden sind, und daß der prismatische Körper den Radial-(15) und den Axialumlenkspiegel (16) mit durch die Schnittstellen (27,28) der Kanalachsen (29 bis 31) gelegten Reflexionsflächen (15', 16') trägt.

4. Roboterhand nach einem der Ansprüch 1 bis 3, **dadurch gekennzeichnet**, daß eine rohrförmige roboterseitige Handachse (11) werkstückseitig mit einer Abschlußwand (32) versehen ist, an der die Ausbaueinheit (20) oder die Anschlußeinheit (22) befestigt ist.

5. Roboterhand nach einem der Ansprüche 1 bis 4, **dadurch gekennzeichnet,** daß die rohrförmige roboterseitige Handachse (11) an einem roboterseitigen Endflansch (33) um ihre Längsachse (34) drehbar gelagert ist und im Bereich des Endflansches (33) eine mit der Anschlußeinheit (22) des Lichtleitkabels (23) fluchtende Kabeldurchführung (35) aufweist.

6. Roboterhand nach einem der Ansprüche 1 bis 5, **dadurch gekennzeichnet,** daß die roboterseitige Handachse (11) im Bereich des Endflansches (33) eine zentrale Durchtrittsöffnung (41) der zentralen Strahlzuführung aufweist.

7. Roboterhand nach einem der Ansprüche 1 bis 6, **dadurch gekennzeichnet,** daß an dem Endflansch (33) eine Halteeinrichtung (36) eines Lasers (37) befestigt ist, dessen Laserstrahlung der zentralen Durchtrittsöffnung (41) der roboterseitigen Handachse (11) im Bereich des Endflansches (33) über Umlenkspiegel (38) der Halteeinrichtung (36) fluchtend zugeführt ist,

8. Roboterhand nach einem der Ansprüche 1 bis 7, **dadurch gekennzeichnet**, daß in die roboterseitige Handachse (11) ein Diodenlaser (39) eingebaut ist, dessen Laserstrahlung innerhalb der Handachse (11) zentral dem Radialumlenkspiegel (15) der Ausbaueinheit (20) oder ohne Strahlumlenkung direkt dem Schwenkachsenspiegel (18) zugeleitet ist.

9. Roboterhand nach Anspruch 8, **dadurch gekennzeichnet**, daß im Bereich des Endflansches (33) der roboterseitigen Handachse (11) eine Durchführung (40,40') für eine Elektroleitung (73) und/oder eine Kühlmittelleitung (74) des Diodenlasers (39) vorhanden ist,

## Claims

1. Robot hand (10) for use in the laser treatment of workpieces, in particular for a robot with an articulated arm, having a robot-side hand shaft (11) to which is attached a workpiece-side hand shaft (12) in such a manner as to be able to pivot by means of a shaft body (13) which is provided with a processing optics (14) which directs the laser beams at the workpiece, having a central beam guide in the robot-side hand shaft (11) which guides the laser beams to a radially-deflecting mirror (15) and to a downstream axially-deflecting mirror (16), from which the laser beams impinge upon a pivot shaft mirror (18) which deflects said laser beams into the pivot shaft (17) of the shaft body (13) and having a shaft body mirror (19) which directs laser beams coming from the pivot shaft mirror (18) at the processing optics (14), characterised in that at least the axially-deflecting mirror (16) is part of an extension unit (20) which is located inside the robot-side hand shaft (11) and that at the site of the extended axially-deflecting mirror (16) an axis-parallel beam through-passage (21) to the pivot shaft mirror (18) is provided.

2. Robot hand according to claim 1, characterised in that at the site of the extended axially-deflecting mirror (16) a connection unit (22) of a light conducting cable (23) of the robot-side hand shaft (11) is installed.

3. Robot hand according to any one of claims 1 or 2, characterised in that the extension unit (20) is a prismatic body having mutually parallel beam through-passage channels (24,25) which are mutually connected by means of a connection channel (26) which is vertical thereto, and that the prismatic body supports the radially-deflecting mirror (15) and the axially-deflecting mirror (16) with reflexion surfaces (15', 16') which lie through the points of intersection (27,28) of the channel axes (29 to 31).

4. Robot hand according to any one of claims 1 to 3, characterised in that a tubular robot-side hand shaft (11) is provided on the workpiece side with an end wall (32) to which the extension unit (20) or the connection unit (22) is attached.

5. Robot hand according to any one of claims 1 to 4, characterised in that the tubular robot-side hand shaft (11) is mounted on a robot-side end flange (33) in such a manner as to be able to rotate about its longitudinal axis (34) and comprises in the region of the end flange (33) a cable through-passage (35) which is aligned with the connection unit (22) of the light conducting cable (23).

6. Robot hand according to any one of claims 1 to 5, characterised in that the robot-side hand shaft (11) comprises in the region of the end flange (33) a central through-passage orifice (41) of the central beam guide.

7. Robot hand according to any one of claims 1 to 6, characterised in that a holding device (36) of a laser (37) is attached to the end flange (33) and the laser beams of said laser are directed in alignment to the central through-passage orifice (41) of the robot-side hand shaft (11) in the region of the end flange (33) via a deflecting mirror (38) of the holding device (36).

8. Robot hand according to any one of claims 1 to 7, characterised in that a diode laser (39) is installed in the robot-side hand shaft (11) and the laser beams of said diode laser are directed within the hand shaft (11) centrally to the radially-deflecting mirror (15) of the extension unit (20) or, without the beams being deflected, directly to the pivot shaft mirror (18).

9. Robot hand according to claim 8, characterised in that in the region of the end flange (33) of the robot-side hand shaft (11) there is provided a through-passage (40,40') for an electric line (73) and/or a coolant line (74) of the diode laser (39).

## Revendications

1. Main de robot (10) pour l'usinage de pièces au laser, en particulier pour un robot à bras articulé, comportant un axe de main situé côté robot (11) sur lequel un axe de main situé côté pièce (12) est monté pivotant à l'aide d'un corps d'axe (13) pourvu d'un système optique d'usinage (14) qui dirige le rayonnement laser vers la pièce, une amenée de rayon centrale dans l'axe de main situé côté robot (11), qui amène le rayonnement laser jusqu'à un miroir de déviation radiale (15) et jusqu'à un miroir de déviation axiale (16) qui est placé en aval et à partir duquel le rayonnement laser arrive sur un miroir à axe de pivotement (18) qui dévie ledit rayonnement suivant l'axe de pivotement (17) du corps d'axe (13), et enfin un miroir de corps d'axe (19) qui amène au système optique d'usinage (14) le rayonnement laser provenant du miroir à axe de pivotement (18), **caractérisée** en ce que le miroir de déviation axiale (16), au moins, fait partie d'une unité démontable (20) qui se trouve à l'intérieur de l'axe de main situé côté robot (11), et en ce qu'il est prévu à la place du miroir de déviation axiale (16) démonté un passage de rayonnement (21), parallèle à l'axe, qui mène au miroir à axe de pivotement (18).

2. Main de robot selon la revendication 1, **caractérisée** en ce qu'il est prévu, montée à la place du miroir de déviation axiale (16) démonté, une unité de raccordement (22) d'un conduit de lumière (23) de l'axe de main situé côté robot (11).

3. Main de robot selon la revendication 1 ou 2, **caractérisée** en ce que l'unité démontable (20) est un corps prismatique avec des conduits parallèles de passage de rayon (24, 25) qui sont reliés entre eux par un conduit de liaison (26) vertical par rapport à ces conduits, et en ce que le corps prismatique porte le miroir de déviation radiale (15) et le miroir de déviation axiale (16) avec des surfaces de réflexion (15', 16') placées à l'intersection (27, 28) des axes de conduits (29 à 31).

4. Main de robot selon l'une des revendications 1 à 3, **caractérisée** en ce qu'un axe de main tubulaire situé côté robot (11) est pourvu, côté pièce, d'une paroi d'obturation (32) à laquelle est fixée l'unité démontable (20) ou l'unité de raccordement (22).

5. Main de robot selon l'une des revendications 1 à 4, **caractérisée** en ce que l'axe de main tubulaire situé côté robot (11) est monté en rotation autour de son axe longitudinal (34) sur une collerette d'extrémité (33) située côté robot, et comporte dans la zone de la collerette d'extrémité (33) un passage de câble (35) qui se trouve dans l'alignement de l'unité de raccordement (22) du conduit de lumière (23).

6. Main de robot selon l'une des revendications 1 à 5, **caractérisée** en ce que l'axe de main situé côté robot (11) présente dans la zone de la collerette d'extrémité (33) une ouverture de passage centrale (41) de l'amenée de rayon centrale.

7. Main de robot selon l'une des revendications 1 à 6, **caractérisée** en ce qu'il est prévu, fixé à la collerette d'extrémité (33), un dispositif de fixation (36) d'un laser (37) dont le rayonnement laser est amené, dans l'alignement, dans l'ouverture de passage centrale (41) de l'axe de main situé côté robot (11), dans la zone de la collerette d'extrémité (33), par l'intermédiaire de miroirs de déviation (38) du dispositif de fixation (36).

8. Main de robot selon l'une des revendications 1 à 7, **caractérisée** en ce qu'il est prévu, montée dans l'axe de main situé côté robot (11), une diode laser (39) dont le rayonnement laser est amené de manière centrée, à l'intérieur de l'axe (11), sur le miroir de déviation radiale (15) de l'unité démontable (20) ou bien, sans déviation de rayon, directement sur le miroir à axe pivotant (18).

9. Main de robot selon la revendication 8, **caractérisée** en ce qu'il est prévu, dans la zone de la collerette d'extrémité (33) de l'axe de main situé côté robot (11), un passage (40, 40') pour une ligne électrique (73) et/ou une conduite d'agent de refroidissement (74) de la diode laser (39).
